# EUROPEAN PATENT APPLICATION

(11) **EP 3 772 479 A1**
(43) Date of publication of application: **10.02.2021**
(21) Application number: 20167331.6
(22) Date of filing: 31.03.2020
(51) Int. Cl.: B66B 1/40

(54) **METHOD AND SYSTEM OF LEVELING AN ELEVATOR CAR**

(30) Priority: 07.08.2019 CN 201910725042
(71) Applicant: Otis Elevator Company, Farmington, Connecticut 06032 (US)
(72) Inventor: TANG, XiaoBin, Tianjin 300457 (CN); SCHÖNAUER, Uwe, 13507 Berlin (DE); PAETOW, Alexander, 13507 Berlin (DE); PAHLKE, Derk, 13507 Berlin (DE)
(74) Representative: Dehns

(57) **Abstract**

The present application provides a method of leveling an elevator car, a projection device and a leveling system. The method of leveling an elevator car comprises: stopping the elevator car on a set landing; generating a calibration image that spans across the base plane of the elevator car and the base plane of the landing; processing the calibration image, and determining whether the elevator car is leveled with the landing based on the calibration image processing result; and ascending or descending the elevator car when it is determined that the elevator car is not leveled with the landing. According to the leveling method of the present application, it is possible to quickly and easily identify whether the object to be leveled is leveled with the leveling reference by analyzing and processing the calibration image, and even further identify the degree of levering, thereby realizing quick and simple leveling. By means of the projection device and the leveling system of the present application, the leveling method can be better assisted to be implemented or executed.

## Description

### [Field of the Invention]

The present application relates to the field of elevator installation, and in particular to a leveling method, a projection device and a leveling system for an elevator.

### [Background of the Invention]

As a tool to facilitate passengers' walking between floors or shorten passengers' walking distance, passenger transport devices are very common in daily life. As an example, the most commonly seen ones are escalators and elevators generally used between the floors of commercial buildings, and moving walkways generally used in large airports.

For an elevator, it is often necessary to set a dedicated hoistway and an elevator car that runs within the hoistway. An openable door is provided on the wall of the elevator car. When the elevator car runs in the hoistway, the door is normally kept closed and the elevator car is thus formed as a relatively closed separate space. And when the elevator car arrives at a desired landing, the door opens for the passengers to enter and exit the elevator car.

Before application, an elevator has two important processes of production and installation. Upon completion of production, the elevator components need to be transported to the desired building for on-site installation. As a part of installation, how to level the elevator car so that it can realize accurate stop on each landing is an important part to prove the quality and reliability of the elevator and provide good user experience. At present, in order to ensure leveling accuracy, two leveling mechanics are normally arranged, one mechanic being arranged in the elevator car to measure and judge the leveling of the elevator car and the desired landing, and the other being arranged on top of the elevator car to perform a leveling operation of ascending or descending according to the on-site judgment of the mechanic located in the elevator car. Such a leveling method relies heavily on the communication and communication accuracy between the staff and is therefore inefficient. In addition, it also has a high labor cost.

### [Summary of the Invention]

The present application aims to provide a method of quickly and easily leveling an object to be leveled with a leveling reference, and a projection device and a leveling system for implementing such a leveling method. The present application also aims to provide a method of quickly and easily leveling an elevator car with the landing.

In order to achieve at least one object of the present application, according to an aspect of the present application, a method of leveling an elevator car is provided, comprising: stopping the elevator car on a set landing; generating a calibration image that spans across a base plane of the elevator car and a base plane of the grounding; processing the calibration image, and determining whether the elevator car is leveled with the landing based on the calibration image processing result; and ascending or descending the elevator car when it is determined that the elevator car is not leveled with the landing.

In some embodiments the calibration image comprises a regular pattern; wherein, in the step of generating the calibration image: the calibration image containing the regular pattern is projected across the base plane of the elevator car and the base plane of the landing; and in the step of processing the calibration image: when the regular pattern deforms, it is determined that the elevator car is not leveled with the landing.

In some embodiments the calibration image further comprises a reference object, the reference object being a scale line for indicating a degree of leveling of the elevator car and the landing; wherein, in the step of generating the calibration image: when the calibration image containing the regular pattern is projected across the base plane of the elevator car and the base plane of the landing, the scale line is projected to be parallel to the edge of the base plane of the elevator car or to the edge of the base plane of the landing; and in the step of processing the calibration image: when the regular pattern deforms, a degree of non-leveling of the elevator car and the landing is determined based on an indication of the scale line.

In some embodiments the regular pattern comprises a combination of one or more of a circle, an ellipse, a triangle, a rectangle, a regular line and a trapezoid.

In some embodiments a projection device that generates the calibration image containing the regular pattern is disposed in the elevator car at a set height, and is adjusted at an angle to project the calibration image containing the regular pattern across the base plane of the elevator car and the base plane of the landing.

In some embodiments, in the step of adjusting the elevator car: when the calibration image containing the regular pattern is projected from the first angle, if the regular pattern deforms and the width of a pattern on the edge of the base plane of the elevator car is smaller than the width of a pattern on the edge of the base plane of the landing, it is determined that the elevator car is lower than the floor; or, if the regular pattern deforms and the width of a pattern on the edge of the base plane of the elevator car is larger than the width of a pattern on the edge of the base plane of the landing, it is determined that the elevator car is higher than the floor; or when a calibration image containing the regular pattern is projected from the second angle, if the regular pattern deforms and the width of a pattern on the edge of the base plane of the elevator car is smaller than the width of a pattern on the edge of the base plane of the landing, it is determined that the elevator car is higher than the landing; or, if the regular pattern deforms and the width of a pattern on the edge of the base plane of the elevator car is larger than the width of a pattern on the edge of the base plane of the landing, it is determined that the elevator car is lower than the landing.

In some embodiments it further comprises a camera disposed inside the elevator car or above the elevator car, wherein acquiring the indication of scale line which is used to indicate the degree of leveling of the elevator car and the landing by the camera.

In some embodiments, in the step of generating the calibration image: the calibration image that spans across the base plane of the elevator car and the base plane of the landing is taken, wherein the calibration images include at least two; and in the step of processing the calibration image: shooting angles of at least two calibration images are acquired, and whether the elevator car is leveled with the landing is determined based on the at least two calibration images and the shooting angles of the calibration images.

In some embodiments a reference object having known dimensions is further included; wherein, in the step of generating the calibration image: the calibration image that spans across the base plane of the elevator car and the base plane of the landing is taken, wherein the calibration images includes at least two, and each of the calibration images includes the reference object; and in the step of processing the calibration image: shooting angles of at least two calibration images are acquired, and known dimensions of the base plane of the elevator car is also acquired; and a degree of non-leveling of the elevator car and the landing is determined based on the at least two calibration images, the shooting angles of the calibration images, the known dimensions of the reference object and the known dimensions of the base plane of the elevator car.

In some embodiments, known dimensions of a car door sill is acquired when the car door sill as the base plane of the elevator car is regarded as the reference object.

In some embodiments, the method further comprises: obtaining an actual height after the leveling based on a current height of the elevator car and the degree of non-leveling; and updating a preset stop height of a current floor recorded in the elevator system based on the actual height after the leveling.

In some embodiments, the base plane of the elevator car is the floor of the elevator car, and the base plane of the landing is the floor of the landing.

In order to achieve at least one object of the present application, according to another aspect of the present application, a leveling method is further provided, comprising: projecting a calibration image across a base plane of an object to be leveled and a base plane of a leveling reference, wherein the calibration image comprises a regular pattern; determining the object to be leveled to be not leveled with the leveling reference when the regular pattern deforms; and ascending or descending the object to be leveled based on the determination result.

In order to achieve at least one object of the present application, according to still another aspect of the present application, a projection device for leveling an elevator car is further provided, comprising: a projection lens with a calibration image containing a regular pattern disposed thereon; wherein, when the projection device is in operation, the calibration image is projected through the projection lens.

In some embodiments, the calibration image on the projection lens further comprises a scale line for indicating a degree of leveling of a base plane of an object to be leveled and a base plane of a leveling reference; wherein, when the projection device is in operation, the scale line is projected to be parallel to the edge of the base plane of the object to be leveled or to the edge of the base plane of the leveling reference.

In some embodiments, the regular pattern comprises a combination of one or more of a circle, an ellipse, a triangle, a rectangle, a regular line and a trapezoid.

In order to achieve at least one object of the present application, according to still another aspect of the present application, a system of leveling an elevator car is further provided, comprising: a calibration image generating device for generating a calibration image that spans across a base plane of the elevator car and a base plane of the landing; a calibration image processing device for processing the calibration image and determining whether the elevator car is leveled with the landing based on a calibration image processing result; and a leveling device for ascending or descending the elevator car based on a determination result.

In some embodiments, the calibration image generating device comprises a projection device comprising a projection lens with a calibration image containing a regular pattern disposed thereon; wherein, when the projection device is in operation, the calibration image is projected through the projection lens; and the calibration image processing device determines that the elevator car is not leveled with the landing when the regular pattern deforms.

In some embodiments, the method further comprises: a reference object, the reference object being a scale line for indicating a degree of leveling of the elevator car and the landing; wherein, the projection device projects the scale line to be parallel to an edge of a base plane of the elevator car or to an edge of a base plane of the landing; and the calibration image processing device determines a degree of non-leveling of the elevator car and the landing based on an indication of the scale line when the regular pattern deforms.

In some embodiments, the calibration image processing device comprises a camera disposed inside the elevator car or above the elevator car, wherein processing the calibration image by the camera to acquire the indication of scale line which is used to indicate the degree of leveling of the elevator car and the landing.

In some embodiments, the calibration image generating device comprises a photographing device for taking the calibration image that spans across the base plane of the elevator car and the base plane of the landing, wherein the calibration images include at least two; wherein, the calibration image processing device is configured to acquire shooting angles of at least two calibration images, and determine whether the elevator car is leveled with the landing based on the at least two calibration images and the shooting angles of the calibration images.

In some embodiments, the method further comprises: a reference object having known dimensions; wherein each of the calibration images taken by the photographing device includes the reference object; and the calibration image processing device is configured to acquire shooting angles of at least two calibration images, and determine a degree of non-leveling of the elevator car and the landing based on the at least two calibration images, the shooting angles of the calibration images and the known dimensions of the reference object.

According to the leveling method of the present application, it is possible to quickly and easily identify whether an object to be leveled is leveled with a leveling reference by analyzing and processing a calibration image, and even further identify the degree of levering. When it is applied to the leveling procedure of an elevator installation, it is possible to quickly and easily identify whether an elevator car is leveled with a landing by analyzing and processing the calibration image, and even further identify the degree of leveling, thereby ascending or descending the elevator according to the observation result by means of the existing adjustment mechanism, so that the elevator car can be quickly and easily leveled. And, the whole process can be completed by a single mechanic, which reduces the labor cost. By means of the projection device and the leveling system of the present application, the leveling method can be better assisted to be implemented or executed.

### [Brief Description of the Drawings]

FIG. 1 is a flow chart of using the leveling method of the present application between the elevator car and the desired landing.
FIG. 2 is a schematic diagram of performing the leveling operation according to the first embodiment of the leveling method of the present application between the elevator car and the desired landing.
FIG. 3 is a schematic diagram of projecting the calibration image across the elevator car and the desired landing in a levering state, wherein the calibration image is a circle.
FIG. 4 is a schematic diagram of projecting the calibration image across the elevator car and the desired landing in a non-leveling state, wherein the calibration image is a circle.
FIG. 5 is a schematic diagram of projecting the calibration image across the elevator car and the desired landing in a levering state, wherein the calibration image is a circle including a scale line.
FIG. 6 is a schematic diagram of projecting the calibration image across the elevator car and the desired landing in a levering state, wherein the calibration image is a trapezoid including a scale line.
FIG. 7 is a schematic diagram of projecting the calibration image across the elevator car and the desired landing in a levering state, wherein the calibration image is a triangle including a scale line.
FIG. 8 is a schematic diagram of performing the leveling operation according to the second embodiment of the leveling method of the present application between the elevator car and the desired landing.
FIG. 9 is a schematic diagram of using the second embodiment of the leveling method of the present application between an elevator car and a desired landing to capture the calibration image from a first angle.
FIG. 10 is a schematic diagram of using the second embodiment of the leveling method of the present application between an elevator car and a desired landing to capture the calibration image from a second angle.

### Reference signs

| | |
|---|---|
| 100 | elevator car |
| 110 | base plane of elevator car |
| 200 | landing |
| 210 | base plane of landing |
| 300 | calibration image |
| 310 | scale line |
| 320 | reference object |
| 400 | projection device |
| 500 | field of view |

### [Detailed Description of the Invention]

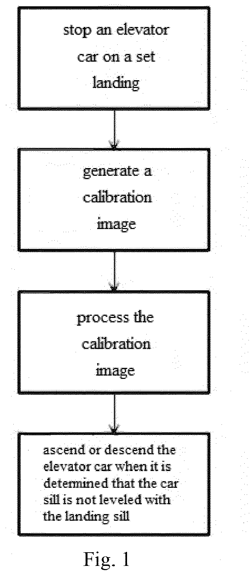

The present application, in conjunction with FIG. 1, describes herein an embodiment of a method of leveling an elevator car, wherein the method first comprises: stopping the elevator car on a set landing. At this time, the elevator car and the set landing may be completely leveled, which is the normal state under ideal conditions; or the two may be not leveled, at which time a corresponding device is required to collect images observed in the elevator car and pass them on to a corresponding elevator adjustment system. Accordingly, the method further comprises: generating a calibration image that spans across a base plane of the elevator car and a base plane of the landing. The calibration image can be obtained by a plurality of means, such as shooting or projection an so on. After that, whether the elevator car is leveled with the landing is determined by processing the calibration image and based on the calibration image processing result. Wherein, there are a lot of ways of processing the calibration image. For example, in an embodiment of projecting the calibration image, whether the elevator car is leveled with the landing is determined by directly observing the projected calibration image. As another example, in an embodiment of taking the calibration image, whether the elevator car is leveled with the landing is determined by directly observing the taken calibration image. Finally, the elevator car is ascended or descended when it is determined that the elevator car is not leveled with the landing. Based at least on the foregoing steps, according to the leveling method applied to elevator installation of the present application, it is possible to quickly and easily identify whether the elevator car is leveled with the landing by analyzing and processing the calibration image, and even further identify the degree of leveling, thereby ascending or descending the elevator according to the observation result by means of the existing adjustment mechanism, so that the elevator car can be quickly and easily leveled. And, the whole process can be completed by a single mechanic, which reduces the labor cost.

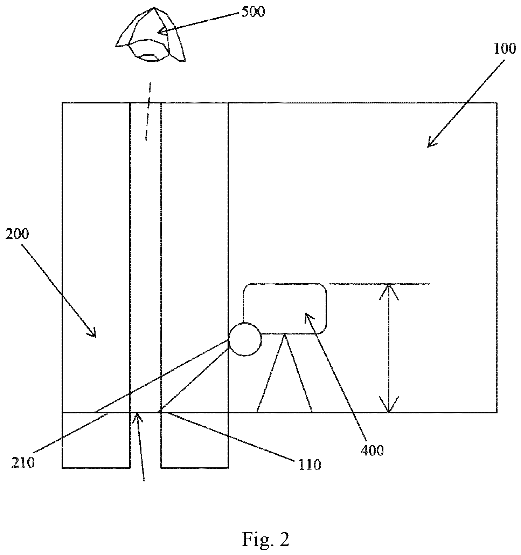

The present application, in conjunction with FIG. 2, describes herein a first embodiment of a method of leveling an elevator car. First, as shown in FIG. 2, an elevator car 100 is to be stopped on a set landing 200, at which time the elevator car 100 and the set landing 200 may be completely leveled, which is the normal state under ideal conditions; or the two may be not leveled, at which time if there is an observer in the elevator car, it is easier to identify the non-leveling, and if the observer is on top of the elevator car, it is not so easy to observe the non-leveling between the two at a field of view 500 considering the relatively long distance in between. Therefore, a projection device 400 can be disposed and adjusted in the elevator car 100, and the projection device 400 is controlled to project a calibration image 300 set to be a regular pattern across a base plane 110 of the elevator car 100 and the base plane 210 of the floor 200. The projected calibration image 300 can simply and easily magnify the non-leveling problem between the elevator car 100 and the set landing 200, or in other words, present it to a level that is clearly visible within the field of view 500, thereby facilitating the mechanic on top of the elevator car to make a judgement. Specifically, when the calibration image deforms, it can be determined that the elevator car is not leveled with the landing. After that, the mechanic observing the foregoing results can simultaneously make a subsequent adjustment such as ascending or descending the elevator car based on the determination result. Based at least on the foregoing steps, according to the leveling method applied to elevator installation of the present application, it is possible to quickly and easily identify whether the elevator car is leveled with the landing by observing the calibration image, and even to further identify the degree of leveling, thereby ascending or descending the elevator according to the observation result by means of the existing adjustment mechanism, so that the elevator car can be quickly and easily leveled. And, the whole process can be completed by a single mechanic, which reduces the labor cost.

Some implementation details of the leveling method mentioned in the foregoing embodiment and hardware devices for performing the steps will be exemplified as follows.

First, for example, in the foregoing method, the base plane 110 of the elevator car used for comparison is the floor of the elevator car, and the base plane 210 of the landing is the floor of the landing. At this time, the mechanic on top of the elevator car can clearly observe within the field of view 500 the calibration image spanning across the floors of the two through the gap between the elevator car 100 and the landing 200, so as to quickly make a determination on whether the two are leveled or not.

In addition, the calibration image used as the criterion for determining leveling may be one of a plurality of regular patterns such as a circle, an ellipse, a triangle, a rectangle, a regular line or a trapezoid; or it may be a combination of the abovementioned regular patterns or other regular patterns not mentioned above. A circle is applied in the example shown in FIG. 1, and it can be seen according to the example that once the non-leveling problem exists between the elevator car and the landing, the observer can easily identify the problem by the deformation of the regular pattern of the circle, so as to make adjustments to solve the problem. As another example, when the calibration image is a regular line such as a straight line or a curve line and so on, a laser projecting device or a normal projecting device using bulb as light source can be used for projection. The projected regular line is either visual laser line or a invisible light such as near infrared line which can be detected by standard electronic devices. Of course, other regular patterns not shown or combinations thereof can also play a similar role, which will not be described here one by one.

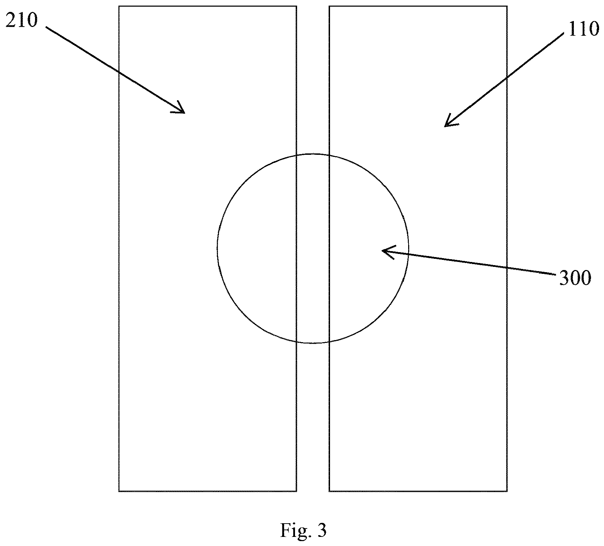

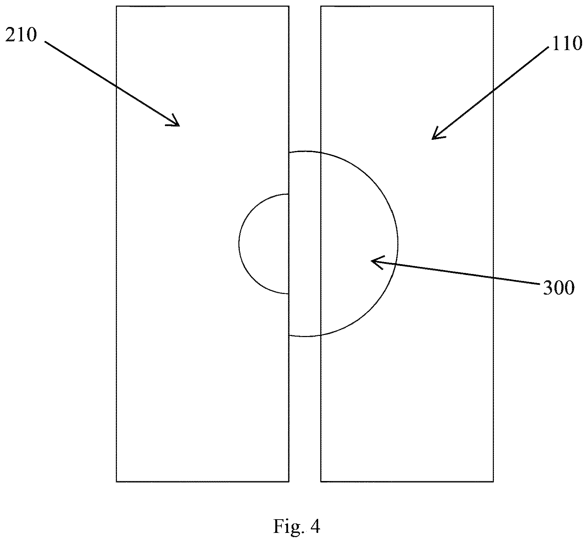

To be more specific, referring to FIGS. 2 to 4, when the projection device 400 is disposed inside the elevator car 100 and the calibration image including the regular pattern is projected from the first angle (i.e. from car towards landing), for example, a circle is projected, if the regular pattern deforms and the arc segment on the edge of the base plane of the elevator car is smaller than the arc segment on the edge of the base plane of the landing, it can be determined that the elevator car is lower than the landing; or, if the regular pattern deforms and the arc segment on the edge of the base plane of the elevator car is larger than the arc segment on the edge of the base plane of the landing, it can be determined that the elevator car is higher than the landing.

Likewise, as an embodiment not shown in the figure, when the projection device projects a calibration image including a regular pattern from the second angle (i.e. from landing towards car), if the regular pattern deforms and the arc segment on the edge of the base plane of the elevator car is smaller than the arc segment on the edge of the base plane of the landing, it can be determined that the elevator car is higher than the landing; or, if the regular pattern deforms and the arc segment on the edge of the base plane of the elevator car is larger than the arc segment on the edge of the base plane of the landing, it can be determined that the elevator car is lower than the landing.

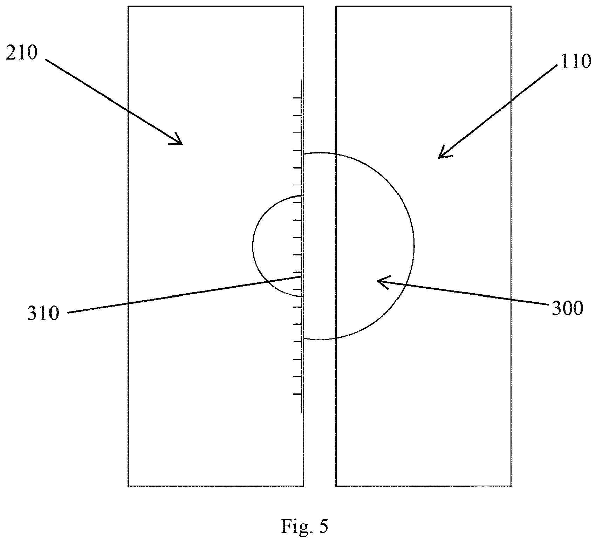

Further, referring to FIG. 5, the calibration image at this time can additionally include a scale line as a reference object for indicating a degree of leveling of the elevator car and the landing. In an application, when a regular pattern, such as a circle, is projected across the base plane of the elevator car and the base plane of the landing, the scale line is projected to be parallel to the edge of the base plane of the elevator car or to the edge of the base plane of the landing. In this way, the degree of deformation of the regular pattern can be quantified relative to the scale on the scale line, so that the observer can accurately acquire the extent to which the elevator car needs to be ascended or descended, thereby quickly adjusting the elevator car in place at one time without repeated adjustments. As a result, the leveling procedure is further optimized. At this time, in order to facilitate the quantification of the scale indicated by the scale line to the degree of ascending or descending of the elevator, a projection device that generates a calibration image containing a regular pattern may be disposed in the elevator car at a set height, and is adjusted at an angle to project the calibration image containing the regular pattern across the base plane of the elevator car and the base plane of the landing. In the case where the height and projection angle of the projection device are known, the correlation between the scale and the ascending or descending amount can be more accurately achieved.

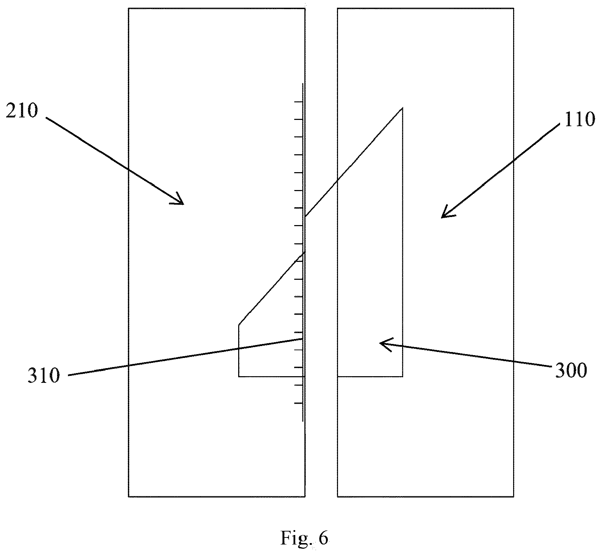

Referring now to FIG. 6, an embodiment of leveling using a trapezoid plus a scale line as a calibration image is shown, wherein, when a regular pattern of a trapezoid is projected across the base plane of the elevator car and the base plane of the landing, the scale line is projected to be parallel to the edge of the base plane of the elevator car or to the edge of the base plane of the landing. At this time, the deformation of the regular pattern occurs as an offset between the oblique side on the edge of the base plane of the elevator car and the oblique side on the edge of the base plane of the landing. In this way, the degree of deformation of the regular pattern can be quantified relative to the scale on the scale line, so that the observer can accurately acquire the extent to which the elevator car needs to be ascended or descended, thereby quickly adjusting the elevator car in place at one time without repeated adjustments. As a result, the leveling procedure is further optimized. At this time, in order to facilitate the quantification of the scale indicated by the scale line to the degree of ascending or descending of the elevator, a projection device that generates a calibration image containing a regular pattern may be disposed in the elevator car at a set height, and is adjusted to an angle to project the calibration image containing the regular pattern across the base plane of the elevator car and the base plane of the landing. In the case where the height and projection angle of the projection device are known, the correlation between the scale and the ascending or descending amount can be more accurately achieved.

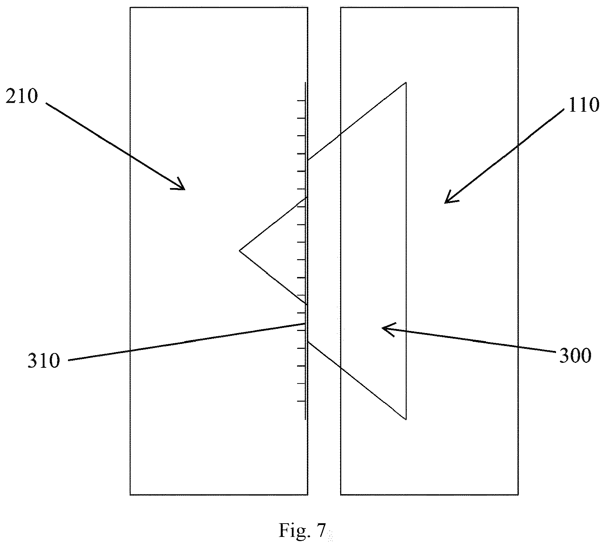

Referring now to FIG. 7, an embodiment of leveling using a triangle plus a scale line as a calibration image is shown, wherein, when a regular pattern of a triangle is projected across the base plane of the elevator car and the base plane of the landing, the scale line is projected to be parallel to the edge of the base plane of the elevator car or to the edge of the base plane of the landing. At this time, the deformation of the regular pattern occurs as an offset between the oblique side on the edge of the base plane of the elevator car and the oblique side on the edge of the base plane of the landing. In this way, the degree of deformation of the regular pattern can be quantified relative to the scale on the scale line, so that the observer can accurately acquire the extent to which the elevator car needs to be ascended or descended, thereby quickly adjusting the elevator car in place at one time without repeated experiments. As a result, the leveling procedure is further optimized. At this time, in order to facilitate the quantification of the scale indicated by the scale line to the degree of ascending or descending of the elevator, a projection device that generates a calibration image including a regular pattern may be disposed in the elevator car at a set height, and is adjusted to an angle to project the calibration image containing the regular pattern across the base plane of the elevator car and the base plane of the landing. In the case where the height and projection angle of the projection device are known, the correlation between the scale and the ascending or descending amount can be more accurately achieved.

In addition, as an embodiment not shown in the drawings, the method acquires the indication of scale line which is used to indicate the degree of leveling of the elevator car and the landing by the camera disposed inside the elevator car or above the elevator car. Due to the boundedness of the eyesight, a camera is able to acquire the indication of scale line more clearly than the eyesight in a long distance situation, wherein the scale line is regarded as a reference object, and thus controlling the ascending and descending degree of an elevator car more accurately and efficiently. As a result, the leveling process is performed. It should be known that the camera is either a device integrated to the elevator system or a device independent from the elevator system. For example, it is the camera already disposed inside the elevator car for monitoring the situation inside the car. As another example, it is a professional camera device or a personal mobile terminal with a camera, e.g. a cellphone, as long as it is available to provide the accurate indication of scale line to the maintenance engineer.

Although the projection process is mentioned in the foregoing method, the calibration image containing the regular pattern generated by the projection is more concerned. Not much limitation is made to the projection device itself. It can be an ordinary projection device, which can obtain the calibration image for projection by connecting itself to a computer or other readable storage device. It can also be a type of projection device dedicated to the leveling procedure as described below. Examples are given as follows.

To be specific, compared with a conventional projection device, the projection device of leveling an elevator car comprises a projection lens with a calibration image containing a regular pattern disposed thereon. This disposition allows the calibration image to be projected directly through the projection lens while the projection device is in operation. In this case, no additional external equipment is needed to introduce the calibration image into the projection device, so that fewer components need to be carried in the process of performing elevator leveling. In addition, there is no dependence on the external computer or network environment, so the process of leveling the elevator car is further simplified.

Alternatively, the calibration image on the projection lens comprises a scale line, which is used as a reference object, for indicating a degree of leveling of a base plane of an object to be leveled and a base plane of a leveling reference. In an application, when the projection device is in operation, the scale line is projected to be parallel to the edge of the base plane of the object to be leveled or to the edge of the base plane of the leveling reference. In this way, the degree of deformation of the regular pattern can be quantified relative to the scale on the scale line, so that the observer can accurately acquire the degree of leveling required, thereby quickly adjusting the elevator car in place at one time without repeated experiments. As a result, the leveling procedure is further optimized.

Likewise, in the foregoing projection device, the calibration image used as the criterion for determining leveling may be one of a plurality of regular patterns such as a circle, an ellipse, a triangle, a rectangle, a regular line or a trapezoid; or it may be a combination of the abovementioned regular patterns or other regular patterns not mentioned above.

Furthermore, based on the prior concept of the method of leveling an elevator, it can be further extended to the leveling procedure in the general field. Therefore, an embodiment of a leveling method is additionally provided herein. The leveling method comprises: first, projecting a calibration image containing a regular pattern across a base plane of an object to be leveled and a base plane of a leveling reference; then, determining the object to be leveled to be not leveled with the leveling reference when the regular pattern deforms; and ascending or descending the object to be leveled based on the determination result. Based at least on the foregoing steps, according to the leveling method of the present application, it is possible to quickly and easily identify whether the object to be leveled is leveled with the leveling reference by analyzing and processing the calibration image, and even further identify the degree of leveling, thereby adjusting the object to be leveled according to the observation result by means of the existing adjustment mechanism, so that the procedure of leveling is quickly and easily realized. And, the whole procedure can be completed by a single mechanic, which reduces the labor cost.

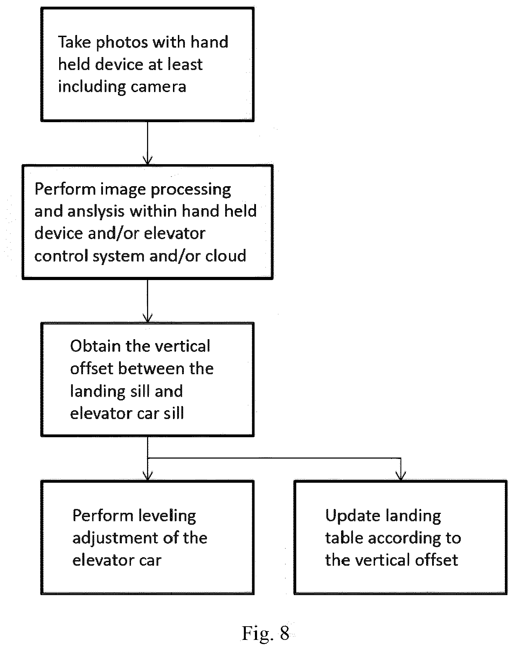

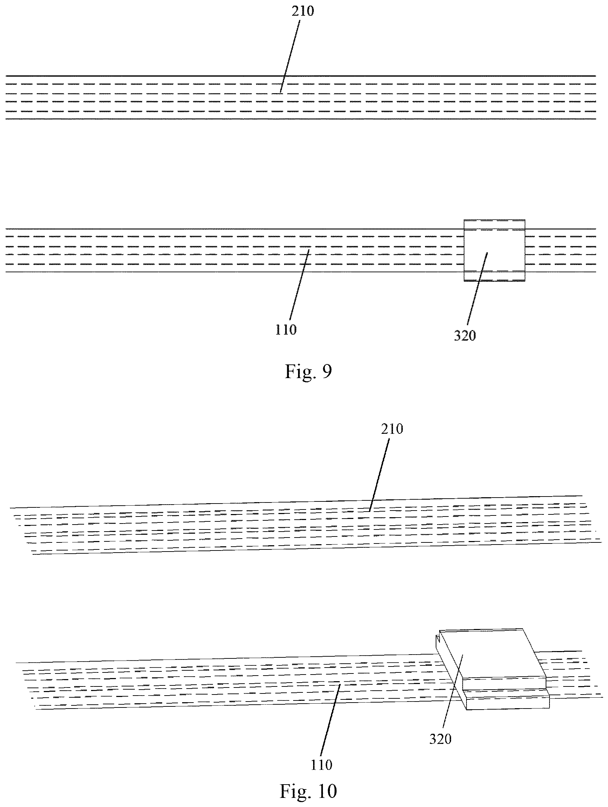

The present application, in conjunction with FIGS. 8 to 10, continues to describe herein a second embodiment of a method of leveling an elevator car. First, the elevator car is to be stopped on a set landing. At this time, the elevator car and the set landing may be completely leveled, which is the normal state under ideal conditions; or the two may be not leveled, at which time a corresponding device is required to collect images observed in the elevator car and pass them on to a corresponding elevator adjustment system. As an example, a handheld tool carrying a camera can be used to capture a calibration image that spans across the base plane 110 of the elevator car and the base plane 210 of the landing. Wherein, considering that there may simultaneously be a vertical offset and a horizontal offset between the two base planes in the calibration image, in order to separate the two offset values and finally obtain the vertical offset between the two base planes required for leveling the elevator car, at least two calibration images at different angles should be taken. As shown in FIGS. 9 and 10, FIG. 9 shows a calibration image taken at a plan view angle, and FIG. 10 shows a calibration image taken at a side view angle. In addition, the handheld tool carrying the camera should also have at least one of a transmission function or an image processing and analysis function. At this time, it can acquire the shooting angles of at least two calibration images by itself, and determine whether the elevator car is leveled with the landing based on the at least two calibration images and the shooting angles of the calibration images; alternatively, the at least two calibration images at different angles taken can be transmitted to a corresponding image processing and analysis module that performs image processing and analysis functions. As an example, the image processing and analysis module can be integrated into an elevator control system. As another example, the image processing and analysis module can also be disposed in the cloud. After that, the elevator control system or the cloud acquires the shooting angles of the at least two calibration images, and determines whether the elevator car is leveled with the landing based on the at least two calibration images and the shooting angles of the calibration images. Based at least on the foregoing steps, according to the leveling method applied to elevator installation of the present application, it is possible to quickly and easily identify whether the elevator car is leveled with the landing by analyzing and processing the calibration images, and even further identify the degree of leveling, thereby ascending or descending the elevator according to the observation result by means of the existing adjustment mechanism, so that the elevator car can be quickly and easily leveled. And, the whole procedure can be completed by a single mechanic, which reduces the labor cost.

Some implementation details of the leveling method mentioned in the foregoing embodiment and hardware devices for performing the steps will be exemplified as follows.

First, the method may also include a reference object having known dimensions to assist in acquiring the actual dimensions of the vertical offset and the horizontal gap between the elevator car and the landing. Wherein, in the step of generating the calibration image, the reference object should be included in each of the calibration images. As an example, the reference object can be the landing sill of the elevator car, while the actual dimensions of the landing sill of the elevator car can be obtained by consulting the model number of the elevator car, which can be recorded in the hand-held tool, the elevator control system or the cloud. Then, corresponding calibration is made in the calibration image in the form of grid lines or parallel lines, so as to use it as a reference for obtaining the actual dimensions of the vertical offset between the elevator car and the landing. As an example, in FIGS. 9 and 10, the calibration parallel lines in the calibration image are shown in dashed lines spanning across the car sill 110 and the landing sill 210, respectively. Alternatively, the reference object can also be a specific item having known dimensions. By placing it within the taken calibration image and making corresponding calibration to its contour in the calibration image in the form of grid lines or parallel lines, it can assist in acquiring the actual dimensions of the vertical offset and the horizontal gap between the elevator car and the landing, that is, the vertical offset. As an example, in FIGS. 9 and 10, the calibration parallel lines in the calibration image are shown in dashed lines adjacent to the contour edges of the reference object 320. After that, in the step of processing the calibration image: shooting angles of at least two calibration images are to be acquired; and a degree of non-leveling of the elevator car and the landing is determined based on the at least two calibration images, the shooting angles of the calibration images and the known dimensions of the base plane of the elevator car. This process quantifies the vertical offset between the elevator car and the landing so that the observer can accurately acquire the extent to which the elevator car needs to be ascended or descended, thereby quickly adjusting the elevator car in place at one time without repeated adjustments. As a result, the leveling procedure is further optimized.

On the basis of the foregoing embodiment, after completing leveling of the elevator car, in order to ensure that the elevator can be stopped at the accurate position of the set landing each time in future runs, the preset stop height of the current landing recorded in the elevator system should also be updated. Specifically, the method comprises: obtaining an actual height after the leveling based on the current height of the elevator car and the degree of non-leveling; and updating the preset stop height of the current landing recorded in the landing table of the elevator system based on the actual height after the leveling. This step thus ensures the landing accuracy of the elevator system in each of the future runs.

Likewise, in order to achieve automation and intelligence in the process, a related leveling system can be further provided to achieve leveling of the elevator car or other objects to be leveled, under de-manpower or labor-saving conditions. The leveling system comprises a calibration image generating device, a calibration image processing device and a leveling device. Wherein, the calibration image generating device is used for a generating calibration image that span across a base plane of the elevator car and a base plane of the landing. The calibration image processing device is used for processing the calibration image and determining whether the elevator car is leveled with the landing based on a calibration image processing result. And, the leveling device is used for ascending or descending the object to be leveled based on a determination result. This disposition quickly and accurately implements the whole leveling procedure while significantly reducing labor costs.

To be specific, in order to implement the leveling method in the first embodiment mentioned above, an adaptive adjustment can be made to the calibration image generating device and the calibration image processing device of the leveling system. As an example, the calibration image generating device may include a projection device, which may include a projection lens with a calibration image containing a regular pattern disposed thereon; wherein, when the projection device is in operation, the calibration image is projected through the projection lens; and the calibration image processing device determines that the elevator car is not leveled with the landing when the regular pattern deforms. This facilitates the subsequent leveling steps.

Further, the calibration image at this time may additionally include a scale line as a reference object for indicating a degree of leveling of the elevator car and the landing. Wherein, the projection device projects the scale line to be parallel to an edge of a base plane of the elevator car or to an edge of a base plane of the landing; and the calibration image processing device determines a degree of non-leveling of the elevator car and the landing based on an indication of the scale line when the regular pattern deforms. In this way, the degree of deformation of the regular pattern can be quantified relative to the scale on the scale line, so that the observer can accurately acquire the extent to which the elevator car needs to be ascended or descended, thereby quickly adjusting the elevator car in place at one time without repeated adjustments.

Further, the calibration image processing device comprises a camera disposed inside the elevator car or above the elevator car, wherein the camera is used to acquire the indication of scale line which is used to indicate the degree of leveling of the elevator car and the landing. Due to the boundedness of the eyesight, a camera is able to acquire the indication of scale line more clearly than the eyesight in a long distance situation, wherein the scale line is regarded as a reference object, and thus controlling the ascending and descending degree of an elevator car more accurately and efficiently. As a result, the leveling process is performed. It should be known that the camera is either a device integrated to the elevator system or a device independent from the elevator system. For example, it is the camera already disposed inside the elevator car for monitoring the situation inside the car. As another example, it is a professional camera device or a personal mobile terminal with a camera, e.g. a cellphone, as long as it is available to provide the accurate indication of scale line to the maintenance engineer.

Still further, in order to implement the leveling method in the second embodiment as mentioned above, an adaptive adjustment can be made to the calibration image generating device and the calibration image processing device of the leveling system. As an example, the calibration image generating device may comprise a photographing device for taking the calibration image that spans across the base plane of the elevator car and the base plane of the landing. Wherein, the offset degree between the base plane of the elevator car and the base plane of the landing can be obtained through taking any one of the calibration image. In addition, considering that there are horizontal gaps between the base plane of the elevator car and the base plane of the landing. That's to say, there may simultaneously be a vertical offset and a horizontal offset between the two base planes in the calibration image. Thus, in order to separate the two offset values and finally obtain the vertical offset between the two base planes required for leveling the elevator car, at least two calibration images at different angles should be taken. After that, the calibration image processing device acquires the shooting angles of at least two calibration images, and determines whether the elevator car is leveled with the landing based on the at least two calibration images and the shooting angle of the calibration images. This facilitates the subsequent leveling steps.

Furthermore, the system may further comprise: a reference object having known dimensions. The system can assist in acquiring the actual dimensions of the vertical offset and the horizontal gap between the elevator car and the landing. Specifically, each calibration image taken by the photographing device should include the reference object. As an example, the reference object can be the landing sill of the elevator car, while the actual dimensions of the landing sill of the elevator car can be obtained by consulting the model number of the elevator car. Alternatively, the reference object can also be a specific item having known dimensions. By placing it within the taken calibration image, it can assist the calibration image processing device in acquiring the the shooting angle of taking the calibration image. Meanwhile, the actual dimensions of the vertical offset and the horizontal gap between the elevator car and the landing can be obtained by the calibration image processing device via analyzing the calibration images of two different shooting angles and a specific item having known dimensions. Finally, determine a degree of non-leveling of the elevator car and the landing based on the at least two calibration images, the shooting angles of the calibration images and the known dimensions of the reference object. This process quantifies the vertical offset between the elevator car and the landing, so that the observer can accurately acquire the extent to which the elevator car needs to be ascended or descended, thereby quickly adjusting the elevator car in place at one time without repeated adjustments. As a result, the leveling procedure is further optimized.

The above examples mainly describe a method of leveling an elevator car, a projection device and a leveling system of the present application. Although only a few of the embodiments of the present application are described, those skilled in the art understand that the present application can, without departing from the spirit and scope of the invention, be implemented in many other forms. Therefore, the illustrated examples and embodiments are to be considered as illustrative but not restrictive, and the invention may cover various modifications or replacements if not departed from the spirit and scope of the present application as defined by the appended claims.

## Claims

1. A method of leveling an elevator car, comprising:
stopping the elevator car on a set landing;
generating a calibration image that spans across a base plane of the elevator car and a base plane of the landing;
processing the calibration image, and determining whether the elevator car is leveled with the landing based on the calibration image processing result; and
ascending or descending the elevator car when it is determined that the elevator car is not leveled with the landing.

2. The method of leveling an elevator car according to claim 1, wherein the calibration image comprises a regular pattern; wherein,
in the step of generating the calibration image: the calibration image containing the regular pattern is projected across the base plane of the elevator car and the base plane of the landing; and
in the step of processing the calibration image: when the regular pattern deforms, it is determined that the elevator car is not leveled with the landing;
wherein optionally, the regular pattern comprises a combination of one or more of a circle, an ellipse, a triangle, a rectangle, a regular line and a trapezoid.

3. The method of leveling an elevator car according to claim 2, wherein the calibration image further comprises a reference object, the reference object being a scale line for indicating a degree of leveling of the elevator car and the landing; wherein,
in the step of generating the calibration image: when the calibration image containing the regular pattern is projected across the base plane of the elevator car and the base plane of the landing, the scale line is projected to be parallel to the edge of the base plane of the elevator car or to the edge of the base plane of the landing; and
in the step of processing the calibration image: when the regular pattern deforms, a degree of non-leveling of the elevator car and the landing is determined based on an indication of the scale line;
optionally further comprising a camera disposed inside the elevator car or above the elevator car, wherein acquiring the indication of scale line which is used to indicate the degree of leveling of the elevator car and the landing by the camera.

4. The method of leveling an elevator car according to claim 2 or 3, wherein a projection device that generates the calibration image containing the regular pattern is disposed in the elevator car at a set height, and is adjusted at an angle to project the calibration image containing the regular pattern across the base plane of the elevator car and the base plane of the landing.

5. The method of leveling an elevator car according to claims 2-4, wherein in the step of adjusting the elevator car:
when the calibration image containing the regular pattern is projected from the first angle, if the regular pattern deforms and the width of a pattern on the edge of the base plane of the elevator car is smaller than the width of a pattern on the edge of the base plane of the landing, it is determined that the elevator car is lower than the landing; or, if the regular pattern deforms and the width of a pattern on the edge of the base plane of the elevator car is larger than the width of a pattern on the edge of the base plane of the landing, it is determined that the elevator car is higher than the landing; or
when the calibration image containing the regular pattern is projected from the second angle, if the regular pattern deforms and the width of a pattern on the edge of the base plane of the elevator car is smaller than the width of a pattern on the edge of the base plane of the landing, it is determined that the elevator car is higher than the landing; or, if the regular pattern deforms and the width of a pattern on the edge of the base plane of the elevator car is larger than the width of a pattern on the edge of the base plane of the landing, it is determined that the elevator car is lower than the landing.

6. The method of leveling an elevator car according to any preceding claim, wherein,
in the step of generating the calibration image: the calibration image that spans across the base plane of the elevator car and the base plane of the landing is taken, wherein the calibration images include at least two; and
in the step of processing the calibration image: shooting angles of at least two calibration images are acquired, and whether the elevator car is leveled with the landing is determined based on the at least two calibration images and the shooting angles of the calibration images.

7. The method of leveling an elevator car according to any preceding claim, further comprising a reference object having known dimensions; wherein,
in the step of generating the calibration image: the calibration image that spans across the base plane of the elevator car and the base plane of the landing is taken, wherein the calibration images include at least two, and each of the calibration images includes the reference object; and
in the step of processing the calibration image: shooting angles of at least two calibration images are acquired; and a degree of non-leveling of the elevator car and the landing is determined based on the at least two calibration images, the shooting angles of the calibration images and the known dimensions of the reference object;
wherein optionally, known dimensions of a car door sill is acquired when the car door sill as the base plane of the elevator car is regarded as the reference object; and
wherein the method optionally further comprises obtaining an actual height after the leveling based on a current height of the elevator car and the degree of non-leveling; and updating a preset stop height of a current floor recorded in the elevator system based on the actual height after the leveling.

8. The method of leveling an elevator car according to any preceding claim, wherein the base plane of the elevator car is the floor of the elevator car, and the base plane of the landing is the floor of the landing.

9. A leveling method, comprising:
projecting an calibration image across a base plane of an object to be leveled and a base plane of a leveling reference, wherein the calibration image comprises a regular pattern;
determining the object to be leveled to be not leveled with the leveling reference when the regular pattern deforms, and
ascending or descending the object to be leveled based on the determination result.

10. A projection device for leveling an elevator car, comprising:
a projection lens with a calibration image containing a regular pattern disposed thereon; wherein, when the projection device is in operation, the calibration image is projected through the projection lens;
wherein the calibration image on the projection lens optionally further comprises a scale line for indicating a degree of leveling of a base plane of an object to be leveled and a base plane of a leveling reference; wherein, when the projection device is in operation, the scale line is projected to be parallel to the edge of the base plane of the object to be leveled or to the edge of the base plane of the leveling reference;
and/or wherein the regular pattern optionally comprises a combination of one or more of a circle, an ellipse, a triangle, a rectangle, a regular line and a trapezoid.

11. A system of leveling an elevator car, comprising:
a calibration image generating device for generating a calibration image that spans across a base plane of the elevator car and a base plane of the landing;
a calibration image processing device for processing the calibration image and determining whether the elevator car is leveled with the landing based on a calibration image processing result; and
a leveling device for ascending or descending the elevator car based on a determination result.

12. The leveling system according to claim 11, wherein the calibration image generating device comprises a projection device comprising a projection lens with a calibration image containing a regular pattern disposed thereon; wherein, when the projection device is in operation, the calibration image is projected through the projection lens; and the calibration image processing device determines that the elevator car is not leveled with the landing when the regular pattern deforms.

13. The leveling system according to claim 12, further comprising:
a reference object, the reference object being a scale line for indicating a degree of leveling of the elevator car and the landing;
wherein, the projection device projects the scale line to be parallel to an edge of a base plane of the elevator car or to an edge of a base plane of the landing; and the calibration image processing device determines a degree of non-leveling of the elevator car and the landing based on an indication of the scale line when the regular pattern deforms;
and optionally wherein the calibration image processing device comprises a camera disposed inside the elevator car or above the elevator car, wherein processing the calibration image by the camera to acquire the indication of scale line which is used to indicate the degree of leveling of the elevator car and the landing.

14. The leveling system according to claims 11-13, wherein the calibration image generating device comprises a photographing device for taking the calibration image that spans across the base plane of the elevator car and the base plane of the landing, wherein the calibration images include at least two; wherein the calibration image processing device is configured to acquire shooting angles of at least two calibration images, and determine whether the elevator car is leveled with the landing based on the at least two calibration images and the shooting angles of the calibration images.

15. The leveling system according to claims 11-14, further comprising:
a reference object having known dimensions; wherein each of the calibration images taken by the photographing device includes the reference object; and the calibration image processing device is configured to acquire shooting angles of at least two calibration images, and determine a degree of non-leveling of the elevator car and the landing based on the at least two calibration images, the shooting angles of the calibration images and the known dimensions of the reference object.
